# EUROPÄISCHE PATENTSCHRIFT

(11) **EP 2 519 481 B1**
(45) Veröffentlichungstag und Bekanntmachung des Hinweises auf die Patenterteilung: **20.04.2016**
(21) Anmeldenummer: 10798324.9
(22) Anmeldetag: 21.12.2010
(51) Int. Cl.: C04B 35/571, C04B 35/622, C04B 35/626, C04B 35/634, C08G 77/50, D01D 5/04, D01F 6/78, D01F 9/10

(54) **VERFAHREN ZUR HERSTELLUNG VON KERAMIKFASERN MIT EINER ZUSAMMENSETZUNG IM BEREICH SiC UND SiC-FASERN**
METHOD FOR PRODUCING CERAMIC FIBERS OF A COMPOSITION IN THE SiC RANGE AND FOR PRODUCING SiC FIBERS
PROCÉDÉ DE PRODUCTION DE FIBRES CÉRAMIQUES PRÉSENTANT UNE COMPOSITION DE SIC ET DE FIBRES DE SIC

(30) Priorität: 30.12.2009 DE 102009055429
(43) Veröffentlichungstag der Anmeldung: 07.11.2012
(73) Patentinhaber: BJS Ceramics GmbH, 86368 Gersthofen (DE)
(72) Erfinder: SITTER, Sandra, 80796 München (DE); REITER, Birgit, 40227 Düsseldorf (DE)
(86) Internationale Anmeldenummer: PCT/EP2010/070430
(87) Internationale Veröffentlichungsnummer: WO 2011/080162

(56) Entgegenhaltungen:
- WO-A2-2010/072739
- DE-A1-102004 042 531
- US-A- 3 892 583
- US-A- 5 278 110
- US-A- 5 792 416
- William Toreki et Al.: "Polymer-Derived Silicon Carbide Fibers with low Oxygen Content" Proceedings of the 16th Annual Conference on Composites and Advanced Ceramic Materials, Part 1 of 2: Ceramic Engineering and Science Proceedings (ed J. B. Wachtman),, [Online] Bd. 13, Nr. 7/8, 26. März 2008 (2008-03-26), Seiten 145-159, XP002625435 John Wiley & Sons, Inc., Hoboken, NJ, USA DOI: 10.1002/9780470313954.ch22 Wiley Online Library Gefunden im Internet: URL:http://onlinelibrary.wiley.com/doi/10. 1002/9780470313954.ch22/summary> [gefunden am 2011-02-28]
- CLADE J ET AL: "A new type of precursor for fibers in the system Si-C" JOURNAL OF THE EUROPEAN CERAMIC SOCIETY, Bd. 25, Nr. 2-3, 1. Januar 2005 (2005-01-01), Seiten 123-127, XP004655094 ELSEVIER SCIENCE PUBLISHERS, BARKING, ESSEX, GB ISSN: 0955-2219 DOI: 10.1016/J.JEURCERAMSOC.2004.07.009
- XUE J-G ET AL: "Preparation of low oxygen SiC fiber by dry spinning" WUJI CAILIAO XUEBAO/JOURNAL OF INORGANIC MATERIALS, Bd. 22, Nr. 4, Juli 2007 (2007-07), Seiten 681-684, XP002625436 SCIENCE PRESS; RESEARCH CENTER FOR ECO-ENVIRONMENTAL SCIENCES; CHINESE ACADEMY OF SCIENCES CN

## Beschreibung

Die Erfindung betrifft ein Verfahren zur Herstellung von Siliciumcarbidfasern aus einer Polysilan-Polycarbosilan-Copolymer-Lösung.

Ein derartiges Verfahren ist bereits bekannt. Toreki et al. (W. Toreki et al., Composite Sci. Tech. 51 (1994) 145-159) beschreiben beispielsweise eine Variante bei der ein Polycarbosilan, hergestellt aus einem Polydimethylsilan durch pyrolytische Polymerisation, in gelöster Form (70 Gewicht% Polymer) mittels Trockenspinnprozess zu Grünfasern gesponnen wird. Hierfür werden Apparaturen mit 3-5 Kapillaren mit je 70-120 µm Durchmesser verwendet. Die Grünfasern werden in Stickstoff, Argon oder Argon/Wasserstoffatmosphären langsam mit Heizraten von 0,5 -1 K/min auf 150°C erhitzt, härten dabei zu formstabilen und pyrolysierbaren Fasern und werden anschließend auf 1000°C erhitzt um Keramikfasern mit Durchmessern von 8-50 µm zu erhalten.

Clade et al. (J. Clade et al., J. Europ. Ceram. Soc. 25 (2005) 123-127) beschreiben die Herstellung von Keramikfasern ausgehend von einem Polysilan-Polycarbosilan, hergestellt durch eine thermische Polymerisation aus einer Disilan-Fraktion. Der polymere Precursor ist noch löslich, aber nicht mehr schmelzbar und wird zusammen mit 2% Polystyrol in Lösung (60-70 Gewichts% Polymer) gebracht, um über ein Trockenspinnverfahren zu Grünfasern versponnen zu werden. Hierfür wird eine Düsenplatte mit 1-5 Kapillaren mit einem Durchmesser von 150 µm verwendet. Nach einer Pyrolyse bei bis zu 1200°C in Stickstoffatmopshäre werden SiC-Keramikfasern mit einem Durchmesser von etwa 25µm erhalten.

In US 5,278,110 ist ein Verfahren zur Herstellung von SiC-Keramikfasern beschrieben, in dem zunächst eine Mischung aus einem Polycarbosilan, hergestellt aus einem Polydimethylsilan durch pyrolytische Polymerisation, und einem Polyvinylsilazan in einem geeigenten Lösungsmittel gelöst (70 Gewichts% Polymer) werden und dann mittels Trockenspinnverfahren Grünfasern hergestellt werden. Die verwendeten Kapillaren haben einen Durchmesser von 74µm. Das beigemischte Polyvinylsilazan kann thermisch vernetzt werden und stabilisiert dabei die gesamte Grünfaser, die zu einer SiC-Keramikfaser pyrolysiert werden kann.

Xue et al. (J.-G. Xue et al., J. Inorg. Mater, 22 (2007) 681-684) beschrieben einen Prozess, dem ein thermisch selbstvernetzendes Precursor-Polymer zugrunde liegt. Dieses wird in Xylol gelöst (60-70 Gewichts% Polymer in Lösung) und über ein Trockenspinnverfahren zu Grünfasern verarbeitet, die zwischen 250°C und 550°C durch genannte Selbstvernetzung gehärtet werden. Die gehärtete Faser kann anschließend zu einer SiC-Keramikfasern pyrolysiert werden.

In US 5,792,416 wird die Herstellung einer Bor-dotierten SiC-Keramikfaser beschrieben. Hierfür wird ein unschmelzbares Polycarbosilan mit einem borhaltigen Precursor und einem Polyvinylsilazan in einem Lösungsmittel gelöst (Polymergehalt 50-80 Gewichts%) und im Trockenspinnverfahren zu Grünfaser gesponnen. In diesem Verfahren werden die Grünfasern zunächst in oxidierender Atmosphäre bei 100-300°C erhitzt, um den Borprecursor zu binden, bevor sie in nicht-oxidierender Atmosphäre bei bis zu 1800°C pyrolysiert und gesintert werden. Die erhaltenen SiC-Keramikfasern haben einen durchschnittlichen Durchmesser von 13,8 µm.

In US 3,892,583 wird ein Prozess beschrieben bei dem zunächst ein Polysilazan Precursor-Polymer durch Reaktion von Chlor-Monosilanen und Ammoniak hergestellt wird, das in einem Trockenspinnverfahren, mit Kapillaren mit Durchmessern von bis zu 400µm versponnen wird. Während des Spinnprozesses vernetzt das die Grünfaser durch das Abdampfen von Ammonika und eine unschmelzbare Faser entsteht. Diese Grünfasern werden bei bis zu 2000°C pyrolysiert, wobei eine Keramikfaser entsteht, die aus Silziumcarbid und Siliziumnitrid zusammengesetzt ist.

Weiterhin befasst sich die DE 10 2004 042 531 A1 mit der Herstellung einer Polysilan-Polycarbosilan-Copolymer-Lösung und dem Spinnen dieser Lösung zu Grünfasern, die durch Pyrolyse in SiC-Fasern umgewandelt werden. Als Ausgangsmaterial für die Herstellung des Copolymers selbst dienen Gemische aus Methylchlordisilanen mit der Zusammensetzung Si₂MeₙCl₆₋ₙ (n = 1 - 4). Dabei werden bevorzugt solche Methylchlordisilane eingesetzt, die als hochsiedende Fraktion bei der Direktsynthese nach Rochow und Müller anfallen und somit als Abfallprodukte kostengünstige Rohstoffe darstellen. Sie bestehen in der Regel aus einem Gemisch aus 1,1,2,2-Tetrachlor-dimethyldisilan und 1,1,2-Trichlortrimethyldisilan mit weniger als 10 mol-% an anderen Bestandteilen. Das Roh-Polysilan wird durch Disproportionierung der Disilan-Gemische unter homogener Katalyse mit einer organischen Stickstoffverbindung als Lewis-Base vorzugsweise bei erhöhter Temperatur hergestellt, wobei die während der Reaktion als Spaltprodukte anfallenden Monosilan-Gemische kontinuierlich abdestilliert werden. Durch eine nachfolgende thermische Behandlung wird das Roh-Polysilan durch Vergrößerung des mittleren Molekulargewichts unschmelzbar gemacht und durch Umlagerungsreaktionen in ein Polysilan-Polycarbosilan-Copolymer (im Folgenden mit "PPC" abgekürzt) überführt. Anschließend wird das PPC in einem indifferenten Lösungsmittel gelöst.

Aus einer derartigen Lösung lassen sich gemäß DE 10 2004 042 531 A1 Fasern spinnen, die durch einen Pyrolyseschritt in SiC-Fasern umgewandelt werden können. Dazu müssen die Lösungen einen Gehalt von 30 bis 95 Gew.-% an Polysilan-Polycarbosilan-Copolymer besitzen, um eine Spinnfähigkeit aufzuweisen und somit als Spinnmasse verwendet werden zu können. Lösungen mit deutlich niedrigeren Gehalten von beispielsweise 20 Gew.-% an PPC sind aufgrund ihrer deutlich niedrigeren Viskosität gemäß der DE 10 2004 042 531 A1 hingegen lediglich zur Herstellung keramischer Matrices nach dem Flüssigphasen-Infiltrationsverfahren geeignet.

Das vorbekannte Verfahren zur Herstellung von SiC-Fasern hat den Nachteil, dass bei den eingesetzten PPC-Gehalten relativ große Kapillardurchmesser von zum Spinnen verwendeten Spinndüsen von 75 bis 300 µm nötig sind, um die relativ zähflüssige Masse mit Gehalten von 30 bis 95 Gew.-% PPC hindurchpressen zu können. Dadurch ergeben sich im Spinnschacht unmittelbar nach Austritt aus den Spinndüsen Grünfasern mit relativ großem Durchmesser von annähernd ebenfalls zwischen 75 und 300 µm. Es sind jedoch Fasern mit End-Durchmessem nach dem Pyrolysieren von deutlich unter 40 µm erwünscht, bevorzugt um 10 µm. Daher müssen die aus den Spinndüsen austretenden Fäden durch sehr hohe Abzugsgeschwindigkeiten von bis zu 500 m/min verstreckt werden.

Wenn jedoch in der Faser vom ursprünglichen Zustand in der Spinnmasse her noch ungerichtete Knäuel von Polysilan-Polycarbosilan-Copolymer-Molekülen vorhanden sind, lassen sich diese durch ein Recken durch Abziehen nur noch bedingt gerade ausrichten. Ein derartiges Ausrichten trägt jedoch wesentlich zum Erreichen eines hohen Elastizitätsmoduls (kurz E-Moduls) bei. Auch eine hohe Zugfestigkeit der pyrolysierten Fasern wird durch ausgerichtete PPC-Moleküle, die eine hohe Grundordnung innerhalb der Grünfasern bewirken, begünstigt.

Des Weiteren beansprucht ein starkes Verstrecken die entstehenden Grünfasern stark und ist Ursache für Oberflächenfehler und andere Schädigungen an den Grünfasern.

Das vorbekannte Verfahren zur Herstellung von SiC-Fasern hat außerdem den Nachteil, dass es kein störungsfreies Spinnen ermöglicht. Es treten häufig Abrisse an den Düsen auf, so dass zumindest für einen Teil der genutzten Spinndüsen neu angesponnen werden muss, was entweder ein erhaltenes Gesamtfaserbündel an dieser Stelle unterbricht oder innerhalb des Bündels zu extrem starken Inhomogenitäten führt. Durch dieses vorbekannte Verfahren lassen sich somit keine Faserbündel homogener Qualität, insbesondere gleichmäßigen Durchmessers aller Einzelfasern, erzielen.

Die mit dem in der DE 10 2004 042 531 A1 beschriebenen Verfahren hergestellten SiC-Fasern besitzen des Weiteren einen nierenförmigen Querschnitt. Auch ist der Durchmesser mit 30 µm relativ groß.

Aufgabe der Erfindung ist, die oben erläuterten Nachteile zu vermeiden, insbesondere ein Verfahren zur Herstellung von SiC-Fasern bereitzustellen, mit dem sich Grünfasern schonend spinnen lassen, so dass aus diesen nach der Umwandlung in Keramikfasern durch Pyrolyse nicht geschädigte oder lediglich gering geschädigte SiC-Fasern hergestellt werden können, die darüber hinaus einen zumindest annähernd kreisförmigen Querschnitt aufweisen, sowie einen hohen E-Modul und eine hohe Festigkeit besitzen.

Die Aufgabe wird mit einem Verfahren gemäß Anspruch 1 gelöst.

Erfindungsgemäß lassen sich niedrigviskose PPC-Lösungen mit PPC-Gehalten von unter 25 Gew.-%, die bisher ausschließlich zur Flüssigphasen-Infiltration verwendet wurden, überraschenderweise dann verspinnen, wenn sie durch Düsen mit Kapillardurchmessern von 20 bis 70 µm, insbesondere von 30 bis 60 µm, insbesondere zwischen 40 und 50 µm extrudiert werden.

Durch einen derart geringen Düsenkapillardurchmesser ist bereits beim Austritt der Spinnmasse aus den Düsen bei den entstehenden Grünfasern ein geringer Durchmesser vorhanden, der bereits nahezu dem Zieldurchmesser der Grünfasern entspricht. Somit müssen die Fasern kaum noch weiter verstreckt werden, um den gewünschten Durchmesser zu erzielen. Dies schont die Grünfasern und führt zu weniger Schädigungen und Oberflächenfehlern.

Es ist überraschend, dass es überhaupt zu einer Fadenbildung der Spinnmasse mit extrem hohem Lösungsmittelanteil kommt. Dies wird vermutlich erst dadurch möglich, dass die Spinnmasse durch Spinndüsen mit sehr kleinem Düsenkapillardurchmesser extrudiert wird und die aus den Spinndüsen austretenden Fäden mit entsprechendem kleinem Faserdurchmesser ein hohes Verhältnis von Oberfläche zu Volumen besitzen. Dadurch verdampft das Lösungsmittel schnell und die in Faserform gebrachte Spinnmasse geliert schnell, wird also so fest, dass sie nicht mehr ihre Faserform verlieren kann. Es werden trotz des geringen Düsenkapillardurchmessers aufgrund der geringen Viskosität dennoch sehr hohe Förderraten erzielt, so dass die entstehenden Fasern mit hohen Geschwindigkeiten abgezogen werden müssen, alleine um den durch das Ausfördern entstehenden Materialfluss "aufzufangen".

Mit dem erfindungsgemäßen Verfahren wird des Weiteren ein störungsfreier Spinnprozess ohne Faserabrisse erzielt. Vermutlich kann in der niedrigviskosen Spinnmasse eingeschlossenes Gas leichter nach oben entweichen als in höherviskosen Massen, so dass der hohe Lösungsmittelgehalt ein Abreißen von Fasern verhindert. Die geringen Spinndüsendurchmesser verhindern darüber hinaus, dass die Spinnmasse ungehindert aus den Düsen fließt, sondern mit einem (wenn auch nur sehr geringen) gewissen Druck beaufschlagt werden muss.

Die Spinnmasse wird in einer ersten Streckphase im freien Fall verstreckt. Im weiteren Verlauf verdampft das Lösungsmittel, was durch entsprechende Einstellung von Parametern des Spinnschachts und der Spinnmasse unterstützt werden kann. Damit wird genügend Lösungsmittel aus der Faser entfernt, um ein Gelieren zu erreichen, d.h. ein Verfestigen der Faser soweit, dass sie nicht mehr zerfließen kann. In einem zweiten Reck-Bereich kann durch das Abziehen mit einer gewissen Wickelgeschwindigkeit die angelierte Faser zusätzlich gereckt werden. Durch das erfindungsgemäße Verfahren werden Fasern erhalten, die nach einer Pyrolyse besonders gute mechanische Eigenschaften aufweisen.

Des Weiteren besitzen die erhaltenen Fasern überraschenderweise einen im Wesentlichen kreisförmigen Querschnitt. Es ist bekannt, dass ein nierenförmiger Querschnitt der Fasern des Stands der Technik dadurch zustande kommt, dass sich zunächst nur ein Mantelbereich der sich nach Austritt aus den Düsen bildenden Grünfasern verfestigt, während ein restlicher Kern noch flüssig ist. Im Rahmen der Erfindung wurde festgestellt, dass durch ein zu starkes Verstrecken beim Abziehen die auf die Grünfasern in Längsrichtung einwirkenden Kräfte die Fasern verformen. Da sich innerhalb des verfestigten Mantelbereichs ein noch flüssiger Kern befindet, bewirken die Kräfte beim Verstrecken ein stellenweises Kollabieren der Fasern, so dass sich im Querschnitt eine Nierenform ergibt. Dieses Problem wird bei dem erfindungsgemäßen Verfahren überraschenderweise dadurch gelöst, dass bereits aus den Düsen sehr dünne Grünfasern austreten. Deswegen ist eine starke Verstreckung mit den beschriebenen schädigenden Kräften nicht nötig, und eine Faser behält ihren runden Querschnitt, der beim Austritt aus der Düse noch vorliegt, bis zum Aufwickeln auf beispielsweise Abzugsrollen bei.

Unter SiC-Fasern werden im Rahmen der Erfindung Fasern verstanden, deren chemische Zusammensetzung im Bereich von Siliciumcarbid liegt, wobei das Atom-Verhältnis von Silicium zu Kohlenstoff allerdings nicht notwendigerweise exakt 1:1 beträgt, sondern davon zu einem höheren Si-Gehalt oder höheren C-Gehalt hin abweichen kann, sowie weitere Elemente oder Verbindungen als Verunreinigungen enthalten sein können.

Vorteilhafte Aus- und Weiterbildungen des erfindungsgemäßen Verfahrens sind in den Unteransprüchen ausgeführt.

Vorteilhafterweise wird mit Abzugsgeschwindigkeit zwischen 50 m/min und 1000 m/min, insbesondere zwischen 100 und 750 m/min, vorzugsweise zwischen 200 und 500 m/min gesponnen. Durch diese hohen Geschwindigkeiten wird eine Fadenbildung der Spinnmasse mit hohem Lösungsmittelanteil verbessert.

Bei den verwendeten Düsendurchmessern fließt die Spinnmasse vorzugsweise bereits bei Drücken ab 1 bar, wie etwa zwischen 1 und 40 bar, aus den Spinndüsen. Somit besteht kaum Gefahr, dass in der dünnflüssigen Masse Gas durch hohen Druck in der Spinnmasse gelöst oder eingeschlossen wird, was zu Abrissen an der Spinndüse führen würde.

Durch ein Fließen der Spinnmasse durch Spinndüsen sehr kleinen Kapillardurchmessers bei sehr hohen Scherraten wird eine starke Ausrichtung der Polymermoleküle stark gefördert.

Vorzugsweise ist die Spinnschachttemperatur derart eingestellt, dass das Lösungsmittel nach Austritt der Spinnmasse aus den Spinndüsen noch schneller aus den sich bildenden Grünfasern verdunstet. Bevorzugt sind Temperaturen zwischen 30 und 160 °C, insbesondere zwischen 50 und 100 °C, besonders bevorzugt zwischen 60 und 80 °C. Diese müssen im Einzelfall in Abhängigkeit von der Dampfdruckkurve des bzw. der eingesetzten Lösungsmittel optimiert werden.

Vorzugsweise wird nicht, wie bei vorbekannten Verfahren üblich, ein hoher Partialgegendruck des Lösungsmittels, das auch in der PPC-Lösung vorhanden ist, im Spinnschacht eingestellt, sondern im Gegenteil das aus den sich bildenden Grünfasern austretende Lösungsmittel verstärkt dadurch aus den Fasern entfernt, dass der Spinnschacht mit einem Spülgas gespült wird, das frei von dem Lösungsmittel ist. Als Spülgas wird vorzugsweise ein Inertgas, wie etwa Stickstoff (N₂) oder Argon (Ar), verwendet.

Weiters kann ein schnelles Abdampfen des Lösungsmittels dadurch unterstützt werden, dass ein beim Spinnen verwendetes Inertgas nicht im Gegenstrom eingesetzt wird, sondern sich in der gleichen Richtung wie die Fasern von oben nach unten bewegt. Dadurch wird verhindert, dass aus den Fasern ausdampfendes Lösungsmittel weiter oben im Spinnschacht wieder an die Fasern herangeführt wird und von diesen aufgenommen wird oder zumindest wegen des Aufbaus eines hohen Partialdrucks ein Verdunsten von Lösungsmittel aus den Fasern erschwert.

Bevorzugtes Lösungsmittel für die PPC-Lösung ist ein gesättigter Kohlenwasserstoff aus der Gruppe n-Pentan, n-Hexan, Cyclohexan, n-Heptan, n-Octan, ein aromatischer Kohlenwasserstoff aus der Gruppe Benzol, Toluol, o-Xylol, syn-Mesitylen, ein Chlorkohlenwasserstoff aus der Gruppe Methylenchlorid, Chloroform, Tetrachlorkohlenstoff, 1,1,1-Trichlorethan, Chlorbenzol oder ein Ether aus der Gruppe Diethylether, Diisopropylether, Tetrahydrofuran, 1,4-Dioxan oder eine Mischung von zwei oder mehreren dieser Lösungsmittel.

Wird als Lösungsmittel Toluol verwendet, liegt die Temperaturen im Spinnschacht bevorzugt zwischen 50 und 100 °C, insbesondere zwischen 60 °C und 80 °C, die Temperatur der PPC-Lösung im Spinnbehälter bevorzugt zwischen 20 und 40 °C, insbesondere zwischen 25 und 35 °C. Bei Verwendung eines anderen Lösungsmittels ändern sich die bevorzugten Temperaturen der PPC-Lösung und des Spinnschachts entsprechend vor allem in Abhängigkeit der Dampfdruckkurven der jeweiligen Lösungsmittel, wobei Temperaturen zu wählen sind, bei denen entsprechende Dampfdrücke wie bei den für Toluol genannten Temperaturbereichen vorliegen.

Der PPC-Lösung kann ein organisches Polymer als Spinnhilfsmittel zugesetzt sein. Dies hat den Vorteil, dass auch bei widrigen Spinnparametern ein Spinnvorgang möglich ist, denn das Spinnhilfsmittel verbessert die viskoelastischen Eigenschaften der Spinnmasse. Dieses Spinnhilfsmittel ist vorzugsweise aus einer Gruppe bestehend aus Polyethylen, Polypropylen, Polystyrol, Polyvinylchlorid, Polyacrylnitril und Poly(4-vinylpyridin) ausgewählt. Der Anteil des Spinnhilfsmittels in der Lösung beträgt bezogen auf den Anteil des PPC substitutiv (d.h. diesen um die entsprechende Menge verringernd) vorzugsweise zwischen 0,5 und 10 Gew.-%.

Alternativ können PPC-Lösungen ohne Spinnhilfsmittel versponnen werden. Dies hat den Vorteil, dass keine Zusatzstoffe in der zu pyrolysierenden Faser vorliegen, die nicht zur Zielstöchimetrie der SiC-Fasern beitragen und/oder die Dichte der pyrolysierten Faser erniedrigen.

Die Pyrolyse der Grünfasern wird vorzugsweise unter Inertatmosphäre, wie etwa Stickstoff und/oder Argon, oder in reduzierender Atmosphäre, insbesondere in einem Gasgemisch bestehend aus Argon und Wasserstoff oder Stickstoffstoff und Kohlenmonoxid oder ähnlichen Kombinationen aus zumindest einem Trägergas und zumindest einem reduzierenden Gas durchgeführt. Die Pyrolyse wird vorteilhafterweise bei Temperaturen oberhalb von 200, insbesondere oberhalb von 300 °C, insbesondere zwischen 700 und 1700 °C durchgeführt, ganz insbesondere zwischen 900 und 1300 °C.

Die pyrolysierten Fasern können vorzugsweise bei Temperaturen zwischen 1000 und 1500 °C gesintert werden, wenn beispielsweise eine niedrigere Porosität oder größere Korngröße erwünscht sind.

Die Herstellung der Spinnmasse ist in der DE 10 2004 042 531 A1 hinsichtlich der Ausgangssubstanzen und der chemischen Vorgänge, die zur Spinnmasse führen bzw. in dieser stattfinden, ausführlich beschrieben. Diesbezüglich werden die in dieser Schrift geschilderten Merkmale der verwendeten PPC-Lösung als Spinnmasse und des Verfahrens zur Herstellung der PPC-Lösung durch Rückbezug aufgenommen. Hinsichtlich der Feststoffkonzentration, des Gehalts an Spinnhilfsmittel, des Lösungsmittelgehalts und weiteren quantitativen Angaben zur Beschreibung der Spinnmasse und ihrer Herstellung gelten im Falle sich widersprechender Angaben stets die in der vorliegenden Schrift gemachten Angaben..

Der Si-Gehalt der SiC-Fasern liegt vorteilhafterweise zwischen 30 und 70 At.-%, der C-Gehalt zwischen 30 und 70 At.-%, besonders bevorzugt jeweils zwischen 40 und 60 At.-%, um dem stöchiometrischen Verhältnis von Siliciumcarbid möglichst nahe zu kommen, wobei vorteilhafterweise ein leichter C-Überschuss eingestellt ist.

Durch die geringe Anzahl von Abrissen ergeben sich Grünfaserbündel und daraus pyrolysierte SiC-Faserbündel mit einer gleichmäßigen Anzahl von Fasern. Diese besitzen wegen des wegfallenden Problems, dass laufend einzelne Fasern neu angesponnen werden müssen, auch keine abschnittsweise erhöhten Durchmesser bzw. Verdickungen.

Im Folgenden soll die Erfindung anhand eines Ausführungsbeispiels beispielhaft näher erläutert werden, ohne sie auf die konkret ausgeführten Fälle zu beschränken.

Es wird ein Polysilan-Polycarbosilan-Copolymer gemäß DE 10 2004 042 531 A1 ausgehend von einem Methylchlordisilan-Gemisch aus dem Müller-Rochow-Prozess hergestellt. Das Polysilan-Polycarbosilan-Copolymer wird mit beispielsweise Toluol als Lösungsmittel in eine PPC-Lösung überführt, die weniger als 25 Gew.-% PPC aufweist. In diesem Beispiel beträgt der PPC-Gehalt 20 Gew.-%. Er kann aber vorteilhafterweise auch noch niedriger sein und beispielsweise zwischen 15 und 20 Gew.-% oder zwischen 10 und 15 Gew.-% betragen.

Diese Polysilan-Polycarbosilan-Copolymer-Lösung wird als Spinnmasse unter Stickstoff als Inertgas in einen Druckbehälter einer Spinnapparatur gefüllt und auf 40 bis 70 °C aufgeheizt. Mittels einer Spinnpumpe wird die Spinnmasse zu einer Düsenplatte gefördert, die 500 einzelne Spinndüsen mit einem Düsenkapillardurchmesser von in diesem Beispiel 40 µm besitzt. Die Spinnmasse wird durch die Spinndüsen extrudiert und mittels einer Abzugsrolle (Galette) durch einen Spinnschacht abgezogen. Die Abzugsgeschwindigkeit wird zwischen 50 und 500 m/min variiert. Bei allen Spinngeschwindigkeiten wird ein sehr gleichmäßiger Spinnprozess erzielt, bei dem es zu keinen Abrissen der Grünfasern an der Düsenplatte kommt.

Ein 1000 m langes Faserbündel wird bei einer Geschwindigkeit von 200 m/min gesponnen. Mehrere 50 cm lange Abschnitte, die dem Grünfaserbündel entlang seiner Länge in regelmäßigen Abständen entnommen werden, werden unter Stickstoff als Inertgasatmosphäre mit einer Aufheizgeschwindigkeit von 250 K/min auf 1300 °C aufgeheizt und bei dieser Temperatur 1 min lang pyrolysiert. Alternativ kann das gesamte Faserbündel in einem einzigen kontinuierlichen Prozessschritt pyrolysiert werden. Zu einer gegebenenfalls gewünschten Verdichtung kann sich ein Sinterschritt bei bis zu 1500 °C für beispielsweise 1 min anschließen.

Die Einzelfasern des erhaltenen SiC-Faserbündels besitzen eine hohe Regelmäßigkeit sowohl untereinander als auch entlang ihrer Längsrichtung. Weniger als 5 % der Fasern im Faserbündel weichen um mehr als 10 % vom ermittelten Mittelwert des Faserdurchmessers von 12 µm ab.

Es wird ein mittlerer E-Modul der SiC-Fasern von 140 GPa bei einer Zugfestigkeit von 2,5 GPa gemessen. Der Sauerstoffgehalt liegt bei 0,4%. Der Querschnitt der Fasern ist im Wesentlichen kreisrund.

Die Erfindung ist nicht auf die konkret genannten Merkmalskombinationen beschränkt, sondern umfasst auch alle anderen denkbaren Kombinationen der erläuterten Merkmale, soweit sich diese im Rahmen der Erfindung nicht widersprechen.

Es liegt auch im Rahmen der Erfindung, Spinnmassen mit einem niedrigeren Lösungsmittelgehalt zu verspinnen, bei denen jedoch durch andere Maßnahmen als den Lösungsmittelgehalt eine entsprechend niedrige Viskosität eingestellt ist, wie durch eine niedrigere mittlere Molmasse, viskositätserniedrigende Zusätze oder dergleichen. In diesen Fällen werden trotz des relativ niedrigen Lösungsmittelgehalts Viskositäten erzielt, die denjenigen der erfindungsgemäß hohen Lösungsmittelgehalten entsprechen. Auch in diesen Fällen wird durch das Zusammenwirken mit einem geringen Düsenkapillardurchmesser ein störungsfreier Spinnprozess mit einem gleichmäßigen Faserbündel erzielt, wobei die erhaltenen SiC-Fasern durch Ausrichten der Polysilan-Polycarbosilan-Copolymere einen hohen E-Modul und eine hohe Zugfestigkeit besitzen.

Weiterhin liegt es im Rahmen der Erfindung, anstelle der ausgehend vom Müller-Rochow-Prozess erhaltenen PPC-Spinnmassen andere, Polysilane und/oder Polycarbosilane enthaltende Spinnmassen mit hohem Lösungsmittelgehalt und/oder niedriger Viskosität bei kleinen Düsenkapillardurchmessern zu verspinnen und dadurch einen störungsfreien Spinnprozess zu erhalten, mit dem gleichmäßige SiC-Faserbündel erhalten werden, die hochmodulige Keramikfasern hoher Festigkeit enthalten.

## Patentansprüche

1. Verfahren zur Herstellung von Keramikfasern mit einer Zusammensetzung im Bereich SiC aus einer Polysilan-Polycarbosilan-Copolymer-Lösung enthaltenden Spinnmasse, wobei die Spinnmasse in einem Trockenspinnverfahren durch Spinndüsen extrudiert und durch einen Spinnschacht zu Grünfasern versponnen wird und die Grünfasern anschließend pyrolysiert werden,
**dadurch gekennzeichnet, dass** die Polysilan-Polycarbosilan-Lösung zwischen 75 Gew.-% und 95 Gew.-%, insbesondere zwischen 80 und 90 Gew.-% an indifferentem Lösungsmittel enthält und die Spinndüsen einen Kapillardurchmesser zwischen 20 und 70 µm, insbesondere zwischen 30 und 60 µm, insbesondere zwischen 40 und 50 µm besitzen.

2. Verfahren nach Anspruch 1, **dadurch gekennzeichnet, dass** mit einer Abzugsgeschwindigkeit zwischen 50 m/min und 1000 m/min, insbesondere zwischen 100 und 750 m/min, insbesondere zwischen 200 und 500 m/min gesponnen wird.

3. Verfahren nach einem oder mehreren der vorhergehenden Ansprüche,
**dadurch gekennzeichnet, dass** mit 50 bis 50.000, insbesondere mit 100 bis 30.000 Spinndüsen, insbesondere mit 200 bis 2.000 Spinndüsen gesponnen wird.

4. Verfahren nach einem oder mehreren der vorhergehenden Ansprüche,
**dadurch gekennzeichnet, dass** die Spinnmasse ein Spinnhilfsmittel aus einer Gruppe bestehend aus Polyethylen, Polypropylen, Polystyrol, Polyvinylchlorid, Polyacrylnitril und Poly(4-vinylpyridin) enthält.

5. Verfahren nach Anspruch 4, **dadurch gekennzeichnet, dass** der Anteil des Spinnhilfsmittels 0,5 bis 10 Gew.-%, insbesondere 1 bis 5 Gew.-%, insbesondere 2,5 bis 4 Gew.-% beträgt.

6. Verfahren nach einem oder mehreren der vorhergehenden Ansprüche,
**dadurch gekennzeichnet, dass** die Spinnschachttemperatur zwischen 40 und 160 °C, insbesondere zwischen 50 und 100 °C beträgt.

7. Verfahren nach einem oder mehreren der vorhergehenden Ansprüche, **dadurch gekennzeichnet, dass** der Spinnschacht mit einem inerten Spülgas gespült wird, das frei von dem Lösungsmittel ist.

8. Verfahren nach Anspruch 7, **dadurch gekennzeichnet, dass** das Spülgas in der gleichen Richtung wie die Fasern bewegt wird.

9. Verfahren nach einem oder mehreren der vorhergehenden Ansprüche, **dadurch gekennzeichnet, dass** das Lösungsmittel ein gesättigter Kohlenwasserstoff aus der Gruppe n-Pentan, n-Hexan, Cyclohexan, n-Heptan, n-Octan, ein aromatischer Kohlenwasserstoff aus der Gruppe Benzol, Toluol, o-Xylol, syn-Mesitylen, ein Chlorkohlenwasserstoff aus der Gruppe Methylenchlorid, Chloroform, Tetrachlorkohlenstoff, 1,1,1-Trichlorethan, Chlorbenzol oder ein Ether aus der Gruppe Diethylether, Diisopropylether, Tetrahydrofuran, 1,4-Dioxan oder eine Mischung von zwei oder mehreren dieser Lösungsmittel ist.

10. Verfahren nach einem oder mehreren der vorhergehenden Ansprüche, **dadurch gekennzeichnet, dass** die Pyrolyse unter Inertatmosphäre, insbesondere in Stickstoff und/oder Argon, oder in reduzierender Atmosphäre, insbesondere in einem Gasgemisch bestehend aus Argon und Wasserstoff oder Stickstoffstoff und Kohlenmonoxid oder ähnlichen Kombinationen aus zumindest einem Trägergas und zumindest einem reduzierenden Gas, bei Temperaturen zwischen 700 und 1700 °C durchgeführt, insbesondere zwischen 900 und 1300 °C.

11. Verfahren nach einem oder mehreren der vorhergehenden Ansprüche, **dadurch gekennzeichnet, dass** die pyrolysierten Fasern bei Temperaturen zwischen 1000 und 1500 °C gesintert werden.

## Claims

1. A method for the production of ceramic fibers with a composition in the SiC range formed from a spin dope containing a polysilane-polycarbosilane copolymer solution, wherein the spin dope is extruded through spin nozzles in a dry spinning process and spun through a spinning duct to green fibers and the green fibers are then pyrolyzed, **characterized in that** the polysilane-polycarbosilane solution contains in the range 75% by weight to 95% by weight, in particular in the range 80% to 90% by weight, of an inert solvent and the spin nozzles have a capillary diameter in the range 20 to 70 µm, in particular in the range 30 to 60 µm, in particular in the range 40 to 50 µm.

2. The method as claimed in claim 1, **characterized in that** spinning is carried out at a draw rate in the range 50 m/min to 1000 m/min, in particular in the range 100 to 750 m/min, preferably in the range 200 to 500 m/min.

3. The method as claimed in one or more of the preceding claims,
**characterized in that** spinning is carried out with 50 to 50 000, in particular with 100 to 30 000 spin nozzles, in particular with 200 to 2 000 spin nozzles.

4. The method as claimed in one or more of the preceding claims,
**characterized in that** the spin dope contains a spinning aid selected from the group consisting of polyethylene, polypropylene, polystyrene, polyvinyl chloride, polyacrylonitrile and poly(4-vinyl pyridine).

5. The method as claimed in claim 4, **characterized in that** the spinning aid fraction is 0.5% to 10% by weight, in particular 1% to 5% by weight, in particular 2.5% to 4% by weight.

6. The method as claimed in one or more of the preceding claims,
**characterized in that** the spinning duct temperature is in the range 40°C to 160°C, in particular in the range 50°C to 100°C.

7. The method as claimed in one or more of the preceding claims,
**characterized in that** the spinning duct is flushed with an inert flushing gas that is free of solvent.

8. The method as claimed in claim 7, **characterized in that** the flushing gas is moved in the same direction as the fibers.

9. The method as claimed in one or more of the preceding claims,
**characterized in that** the solvent is a saturated hydrocarbon selected from the group formed by n-pentane, n-hexane, cyclohexane, n-heptane, n-octane, an aromatic hydrocarbon selected from the group formed by benzene, toluene, o-xylene, syn-mesitylene, a chlorinated hydrocarbon selected from the group formed by methylene chloride, chloroform, carbon tetrachloride, 1,1,1-trichloroethane, chlorobenzene or an ether selected from the group formed by diethyl ether, diisopropyl ether, tetrahydrofuran, 1,4-dioxane or a mixture of two or more of these solvents.

10. The method as claimed in one or more of the preceding claims,
**characterized in that** the pyrolysis is carried out in an inert atmosphere, in particular in nitrogen and/or argon, or in a reducing atmosphere, in particular in a gas mixture consisting of argon and hydrogen or nitrogen and carbon monoxide or similar combinations formed from at least one carrier gas and at least one reducing gas, at temperatures in the range 700°C to 1700°C, in particular in the range 900°C to 1300°C.

11. The method as claimed in one or more of the preceding claims,
**characterized in that** the pyrolyzed fibers are sintered at temperatures in the range 1000°C to 1500°C.

## Revendications

1. Procédé de production de fibres céramiques présentant une composition dans la plage SiC à partir d'une masse de filage contenant une solution de copolymère de polysilane et de polycarbosilane, dans lequel la masse de filage est extrudée au cours d'un procédé de filage à sec à travers des filières et filée à travers une cage de filage pour donner des fibres vertes, puis les fibres vertes sont pyrolysées,
**caractérisé en ce que** la solution de polysilane et de polycarbosilane contient entre 75 %-poids et 95 %-poids, en particulier entre 80 et 90 %-poids de solvant inerte, et les filières possèdent un diamètre de capillaires entre 20 et 70 µm, en particulier entre 30 et 60 µm, en particulier entre 40 et 50 µm.

2. Procédé selon la revendication 1, **caractérisé en ce que** le filage s'effectue à une vitesse d'extraction entre 50 m/min et 1 000 m/min, en particulier entre 100 et 750 m/min, en particulier entre 200 et 500 m/min.

3. Procédé selon l'une ou plusieurs des revendications précédentes,
**caractérisé en ce que** le filage s'effectue avec 50 à 50 000, en particulier avec 100 à 30 000 filières, en particulier avec 200 à 2 000 filières.

4. Procédé selon l'une ou plusieurs des revendications précédentes,
**caractérisé en ce que** la masse de filage contient un adjuvant de filage issu du groupe composé de polyéthylène, polypropylène, polystyrène, polychlorure de vinyle, polyacrylonitrile et poly(4-vinylpyridine).

5. Procédé selon la revendication 4, **caractérisé en ce que** la fraction de l'adjuvant de filage est comprise entre 0,5 et 10 %-poids, en particulier entre 1 et 5 %-poids, en particulier entre 2,5 et 4 %-poids.

6. Procédé selon l'une ou plusieurs des revendications précédentes,
**caractérisé en ce que** la température de cage de filage est comprise entre 40 et 160 °C, en particulier entre 50 et 100 °C.

7. Procédé selon l'une ou plusieurs des revendications précédentes,
**caractérisé en ce que** la cage de filage est purgée par un gaz de purge inerte qui est exempt du solvant.

8. Procédé selon la revendication 7, **caractérisé en ce que** le gaz de purge est déplacé dans le même sens que les fibres.

9. Procédé selon l'une ou plusieurs des revendications précédentes,
**caractérisé en ce que** le solvant est un hydrocarbure saturé issu du groupe n-pentane, n-hexane, cyclohexane, n-heptane, n-octane, un hydrocarbure aromatique issu du groupe benzène, toluène, o-xylène, syn-mésitylène, un hydrocarbure chloré issu du groupe chlorure de méthylène, chloroforme, tétrachlorure de carbone, 1,1,1-trichloroéthane, chlorobenzène ou un éther issu du groupe éther diéthylique, éther diisopropylique, tétrahydrofurane, 1,4-dioxane ou un mélange de deux ou plusieurs de ces solvants.

10. Procédé selon l'une ou plusieurs des revendications précédentes,
**caractérisé en ce que** la pyrolyse s'effectue en atmosphère inerte, en particulier dans de l'azote et/ou de l'argon, ou en atmosphère réductrice, en particulier dans un mélange gazeux composé d'argon et d'hydrogène ou de matière azotée et de monoxyde de carbone ou de combinaisons similaires composées d'au moins un gaz porteur et d'au moins un gaz réducteur, à des températures entre 700 et 1 700 °C, en particulier entre 900 et 1 300 °C.

11. Procédé selon l'une ou plusieurs des revendications précédentes,
**caractérisé en ce que** les fibres pyrolysées sont frittées à des températures entre 1 000 et 1 500 °C.
